# EUROPEAN PATENT APPLICATION

(11) **EP 3 940 465 A1**
(43) Date of publication of application: **19.01.2022**
(21) Application number: 20770639.1
(22) Date of filing: 14.02.2020
(51) Int. Cl.: G05B 19/042, G05B 19/05, G06F 21/31, G06F 21/62, H04L 9/08

(54) **SAFETY SYSTEM AND MAINTENANCE METHOD**

(30) Priority: 12.03.2019 JP 2019045175
(71) Applicant: OMRON Corporation, Shiokoji-dori, Shimogyo-Ku Kyoto-shi Kyoto 600-8530 (JP)
(72) Inventor: NAGATA, Yuta, Kyoto-shi, Kyoto 600-8530 (JP)
(74) Representative: Mewburn Ellis LLP
(86) International application number: PCT/JP2020/005796
(87) International publication number: WO 2020/184064

(57) **Abstract**

A safety system includes a processing execution unit configured to execute safety control in accordance with a safety program, a communication unit configured to mediate an external access to the safety program held by the processing execution unit, a support device configured to transfer the safety program to the communication unit through a network according to an operation of a user, and presentation means configured to present information about the safety program transferred from the support device to the user. The communication unit transfers the safety program transferred from the support device to the processing execution unit on a condition of an instruction from a user.

## Description

### TECHNICAL FIELD

The present invention relates to a remote maintenance function for a safety system.

### BACKGROUND ART

In order to safely use equipment and machines used in various manufacturing sites, functional safety needs to be implemented according to an international standard such as IEC 61508.

Sometimes a safety controller executes a safety program to implement such functional safety. For example, Japanese Patent Laying-Open No. 2010 055652 (PTL 1) discloses a program development support device for a safety controller.

### CITATION LIST

### PATENT LITERATURE

PTL 1: Japanese Patent Laying-Open No. 2010-055652

### SUMMARY OF INVENTION

### TECHNICAL PROBLEM

Usually, an environment in which various kinds of maintenance are executed is provided to a controller or the like that executes safety control in accordance with the safety program. An environment in which maintenance is executed on such safety control needs to be configured according to an international standard such as IEC 62061.

As a result, the maintenance regarding the safety control needs to be executed at the site where the controller is disposed, which becomes a constraint to improve maintenance efficiency and productivity.

An object of the present invention is to provide a configuration capable of more safely executing remote maintenance on a processing execution unit that executes the safety control in accordance with the safety program.

### SOLUTION TO PROBLEM

A safety system according to one aspect of the present invention includes a processing execution unit configured to execute safety control in accordance with a safety program, a communication unit configured to mediate an external access to the safety program held by the processing execution unit, a support device configured to transfer the safety program to the communication unit through a network according to an operation of a user, and presentation means configured to present information about the safety program transferred from the support device to a user. The communication unit transfers the safety program transferred from the support device to the processing execution unit on a condition of an instruction from a user.

According to the present invention, the information about the safety program transferred from the support device is presented to the user, and the safety program is transferred to the processing execution unit for the first time when the user instructs the transfer. Accordingly, even in the remote maintenance, the safety program is updated in cooperation with the user at the site, so that the remote maintenance can be more safely executed.

The support device may transfer to the communication unit the safety program with an input first password. The communication unit may transfer the safety program transferred from the support device to the processing execution unit on a condition that a second password input from a user matches the first password.

According to this configuration, the safety program can be transferred to the processing execution unit subject to the cooperation between the user who transfers the safety program from the support device and the user involved in the communication device that receives the safety program, so that the remote maintenance can be more safely executed.

The first password may be any of an arbitrary character string, an arbitrary one of predetermined candidates, and a value randomly determined by the support device. According to this configuration, the first password in an appropriate format can be used according to a use state or a request in the safety system.

The communication unit may transfer the safety program transferred from the support device to the processing execution unit on a condition that user authentication is successful and a condition that predetermined operation authority is set to the user of which the user authentication is successful. According to this configuration, because the authentication processing more than the normal user authentication is not required, the procedure of the user can be simplified.

The communication unit may discard the safety program transferred from the support device in response to an instruction to reject the transfer from a user. According to this configuration, when the transfer of the safety program is rejected, a risk caused by the communication unit holding the unnecessary safety program can be eliminated.

The information about the safety program may include at least one of a user who updated the safety program, an update date and time of the safety program, and a transfer destination of the safety program. According to this configuration, the user can determine whether to permit the transfer of the safety system after grasping the details of the safety program.

The presentation means may include at least one of a display operation device network-connected to the communication unit, an indicator disposed on an exposed surface of the processing execution unit, and an indicator disposed on an exposed surface of the communication unit. According to this configuration, necessary information can be presented to the user in various modes.

The communication unit may hold an electronic key. The support device may encrypt the safety program such that the communication unit can decrypt the safety program using the electronic key, and transfers the safety program to the communication unit. According to this configuration, the safety program can be surely transferred to the target communication unit, and the rewriting of the safety program can be prevented during the transfer.

The communication unit may hold a secret key as an electronic key. The support device may hold a public key paired with a secret key. According to this configuration, key management can be facilitated in the communication unit and the support device.

The support device may generate a one-time key when the safety program needs to be transferred, encrypt the one-time key using the public key and transmit the encrypted one-time key to the communication unit; and encrypt the safety program using the one-time key and transmit the encrypted safety program to the communication unit. According to this configuration, because the safety program can be encrypted using the one-time key, an increase in security risk due to leakage of the key can be prevented, and the key management can be facilitated.

According to another aspect of the present invention, a maintenance method in a controller system is provided. The controller system includes a processing execution unit that executes safety control in accordance with a safety program, a communication unit that mediates an external access to the safety program held by the processing execution unit, and a support device. The maintenance method includes: transferring, by the support device, the safety program to the communication unit through a network according to an operation of a user; presenting information about the safety program transferred from the support device to a user; and transferring the safety program transferred from the support device to the processing execution unit on a condition of an instruction from a user.

### ADVANTAGEOUS EFFECTS OF INVENTION

According to the present invention, the remote maintenance can be more safely executed on the processing execution unit that executes the safety control in accordance with the safety program.

### BRIEF DESCRIPTION OF DRAWINGS

Fig. 1 is an external view illustrating a configuration example of a safety system according to an embodiment.
Fig. 2 is a schematic diagram illustrating an outline of remote maintenance in the safety system of the embodiment.
Fig. 3 is a schematic diagram illustrating a hardware configuration example of a control unit constituting the safety system of the embodiment.
Fig. 4 is a schematic diagram illustrating a hardware configuration example of a relay unit constituting the safety system of the embodiment.
Fig. 5 is a schematic diagram illustrating a hardware configuration example of a safety unit constituting the safety system of the embodiment.
Fig. 6 is a view illustrating a maintenance requirement for the safety system of the embodiment.
Fig. 7 is a schematic diagram illustrating a hardware configuration example of a support device connected to the safety system of the embodiment.
Fig. 8 is a view illustrating maintenance executed by directly connecting the safety system and the support device of the embodiment.
Fig. 9 is a view illustrating a problem in remote maintenance from the support device with respect to the safety system.
Fig. 10 is a view illustrating one mode of remote maintenance from the support device to the safety system of the embodiment.
Fig. 11 is a view illustrating another mode of the remote maintenance from the support device to the safety system of the embodiment.
Fig. 12 is a view illustrating an example of an improved mode of the remote maintenance from the support device to the safety system of the embodiment.
Fig. 13 is a schematic diagram illustrating an example of a user interface presented to a display operation device in the remote maintenance in Fig. 12.
Fig. 14 is a sequence diagram illustrating a processing procedure in the remote maintenance in Fig. 12.
Fig. 15 is a view illustrating another example of the improved mode of the remote maintenance from the support device to the safety system of the embodiment.
Fig. 16 is a sequence diagram illustrating the processing procedure in the remote maintenance in Fig. 15.
Fig. 17 is a view illustrating still another example of the improved mode of the remote maintenance from the support device to the safety system of the embodiment.
Fig. 18 is a schematic diagram illustrating an example of the user interface presented to the display operation device in the remote maintenance in Fig. 17.
Fig. 19 is a sequence diagram illustrating the processing procedure in the remote maintenance in Fig. 17.
Fig. 20 is a view illustrating still another example of the improved mode of the remote maintenance from the support device to the safety system of the embodiment.
Fig. 21 is a view illustrating an example of operation authority information in Fig. 20.

### DESCRIPTION OF EMBODIMENTS

With reference to the drawings, an embodiment of the present invention will be described in detail. The same or equivalent portion in the drawings is denoted by the same reference numeral, and the description will not be repeated.

### <A. Application example>

An entire configuration of a safety system 1 of the embodiment will be described.

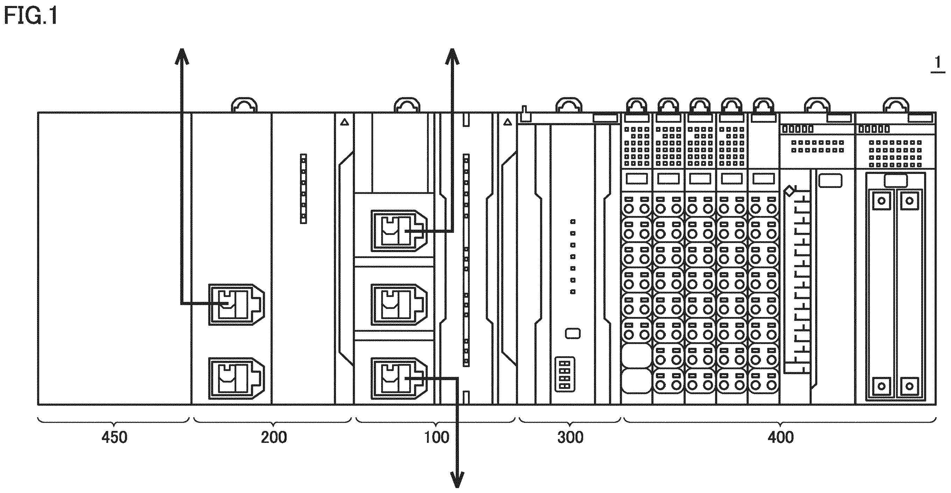

Fig. 1 is an external view illustrating a configuration example of safety system 1 of the embodiment. Referring to Fig. 1, safety system 1 includes a control unit 100, a relay unit 200, a safety unit 300, one or a plurality of functional units 400, and a power supply unit 450.

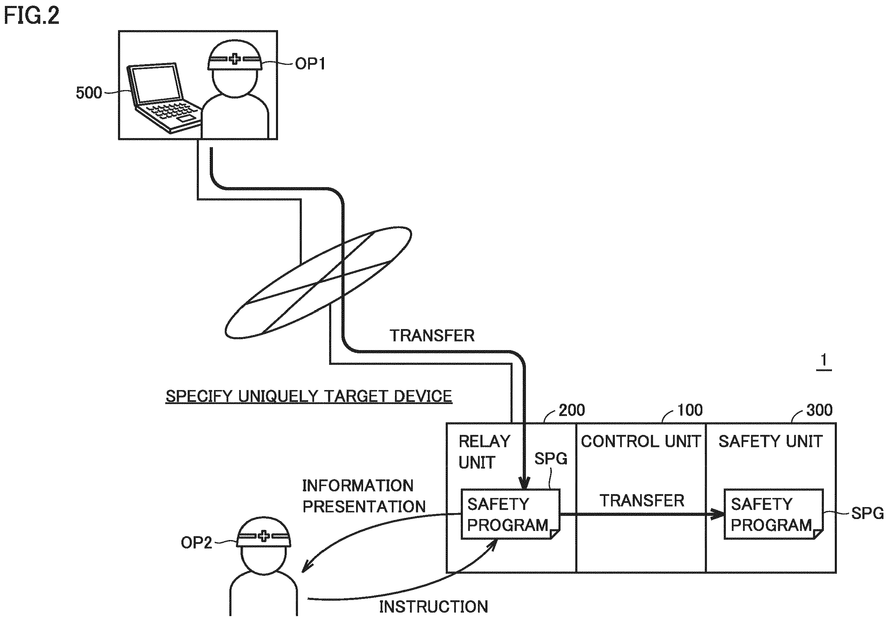

Control unit 100 and relay unit 200 are connected to each other through an arbitrary data transmission path (for example, PCI Express or Ethernet (registered trademark)). Control unit 100 is connected to safety unit 300 and the one or the plurality of functional units 400 through an internal bus 10 (see Fig. 2).

Control unit 100 executes main processing in safety system 1. Control unit 100 executes a control arithmetic calculation in order to control a control target according to an arbitrarily-designed requirement specification. The control arithmetic operation executed by control unit 100 is also referred to as "standard control" in comparison with the control arithmetic operation executed by safety unit 300 described later. In the configuration example of Fig. 1, control unit 100 includes one or a plurality of communication ports. Control unit 100 corresponds to a processing execution unit that executes the standard control in accordance with a standard control program.

Relay unit 200 is connected to control unit 100, and is in charge of a communication function with other devices. In the configuration example of Fig. 1, relay unit 200 includes one or a plurality of communication ports. Details of the communication function provided by relay unit 200 will be described later.

Safety unit 300 executes the control arithmetic calculation independently of control unit 100 in order to implement a safety function regarding the control target. The control arithmetic calculation executed by safety unit 300 is also referred to as "safety control". Usually, the "safety control" is designed to satisfy a requirement implementing the safety function defined in IEC 61508 or the like. The "safety control" collectively refers to processing for preventing the safety of a person from being threatened by equipment, a machine, or the like. Safety unit 300 corresponds to the processing execution unit that executes the safety control in accordance with a safety program SPG.

Functional unit 400 provides various functions for implementing control of various control targets by safety system 1. Functional unit 400 may typically include an I/O unit, a safety I/O unit, a communication unit, a motion controller unit, a temperature adjustment unit, and a pulse counter unit. A digital input (DI) unit, a digital output (DO) unit, an analog output (AI) unit, an analog output (AO) unit, a pulse catch input unit, and a composite unit obtained by mixing a plurality of types can be cited as an example of the I/O unit. The safety I/O unit is in charge of I/O processing regarding the safety control.

Power supply unit 450 supplies power of a predetermined voltage to each unit constituting safety system 1.

In safety system 1 of the embodiment, the remote maintenance can be executed on safety unit 300 that executes the safety control.

Fig. 2 is a schematic diagram illustrating an outline of the remote maintenance in safety system 1 of the embodiment. Referring to Fig. 2, a support device 500 can be connected to safety system 1 through a network.

More specifically, support device 500 is network-connected to relay unit 200 corresponding to the communication unit. Relay unit 200 mediates the external access from support device 500 to the standard control program held by control unit 100 and safety program SPG held by safety unit 300.

Support device 500 can execute the remote maintenance on safety program SPG by an application executed by support device 500. As typical processing of the remote maintenance, support device 500 transfers safety program SPG to relay unit 200 through the network according to the user operation. Relay unit 200 transfers transferred safety program SPG to safety unit 300.

In the present specification, the "maintenance" is a concept including operation of monitoring or changing the state of safety unit 300 in charge of the safety control or safety program SPG executed by safety unit 300. The "maintenance" is basically executed by an operator OP1 (user) who operates support device 500. In the present specification, the term "remote maintenance" means that operator OP1 who operates support device 500 executes the maintenance while cannot directly check (visually observe) safety system 1 (safety unit 300) that is a maintenance target.

In the embodiment, in order to further ensure safety of a worker OP2 at the site where safety system 1 is disposed in the remote maintenance, the check and instruction of the worker OP2 at the site are included subject to the execution of the remote maintenance.

More specifically, safety system 1 presents information about safety program SPG transferred from support device 500 to worker OP2 (user) at the site. Then, relay unit 200 transfers safety program SPG transferred from support device 500 to safety unit 300 while an instruction from worker OP2 (user) at the site is set to the condition.

The presentation of the information about safety program SPG is set to worker OP2 at the site and the instruction from worker OP2 at the site is set to the condition for reflecting safety program SPG, so that the participation of worker OP2 at the site can be enhanced to further ensure the safety.

### <B. Hardware configuration of each unit>

A hardware configuration example of each unit constituting safety system 1 of the embodiment will be described below.

### (b1: Control unit 100)

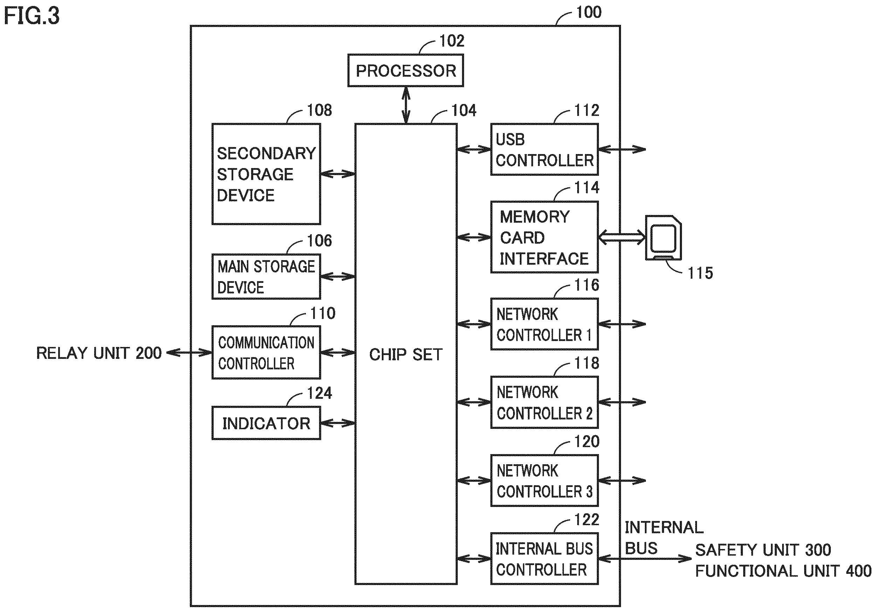

Fig. 3 is a schematic diagram illustrating a hardware configuration example of control unit 100 constituting safety system 1 of the embodiment. Referring to Fig. 3, control unit 100 includes a processor 102 such as a central processing unit (CPU) or a graphical processing unit (GPU), a chip set 104, a main storage device 106, a secondary storage device 108, a communication controller 110, a universal serial bus (USB) controller 112, a memory card interface 114, network controllers 116, 118, 120, an internal bus controller 122, and an indicator 124 as main components.

Processor 102 reads various programs stored in secondary storage device 108, develops the programs in main storage device 106, and executes the programs to implement the control arithmetic calculation regarding the standard control and various pieces of processing as described later. Chip set 104 mediates exchanges of data between processor 102 and each component, thereby implementing the processing of entire control unit 100.

Main storage device 106 is configured by a volatile storage device such as a dynamic random access memory (DRAM) and a static random access memory (SRAM). For example, secondary storage device 108 includes a nonvolatile storage device such as a hard disk drive (HDD) or a solid state drive (SSD).

In addition to the system program, a control program that operates on an execution environment provided by the system program is stored in secondary storage device 108.

Communication controller 110 is in charge of exchanging data with relay unit 200. For example, a communication chip compatible with PCI Express and Ethernet can be adopted as communication controller 110.

USB controller 112 is in charge of the data exchange with any information processing device through USB connection.

Memory card interface 114 is configured such that memory card 115 is detachably attached, and can write the data such as the control program and various settings in memory card 115 or read the data such as the control program and various settings from memory card 115.

Each of network controllers 116, 118, 120 is in charge of the data exchange with any device through the network. Network controllers 116, 118, 120 may adopt an industrial network protocol such as EtherCAT (registered trademark), EtherNet/IP (registered trademark), DeviceNet (registered trademark), or CompoNet (registered trademark).

Internal bus controller 122 exchanges data with safety unit 300 and one or a plurality of functional units 400 constituting safety system 1. For internal bus 10 (see Fig. 2), a communication protocol unique to a manufacturer may be used, or a communication protocol that is the same as or compliant with any of industrial network protocols may be used.

Indicator 124 makes notification of an operating state or the like of control unit 100, and is configured by one or a plurality of LEDs or the like arranged on an exposed surface of the unit.

Although Fig. 3 illustrates the configuration example in which necessary functions are provided by processor 102 executing the program, some or all of these provided functions may be implemented using a dedicated hardware circuit (for example, an application specific integrated circuit (ASIC) or a field-programmable gate array (FPGA)). Alternatively, a main part of control unit 100 may be implemented using hardware (for example, an industrial personal computer based on a general-purpose personal computer) according to a general-purpose architecture. In this case, a plurality of operating systems (OSs) having different uses may be executed in parallel using a virtualization technology, and necessary applications may be executed on each OS.

### (b2: Relay unit 200)

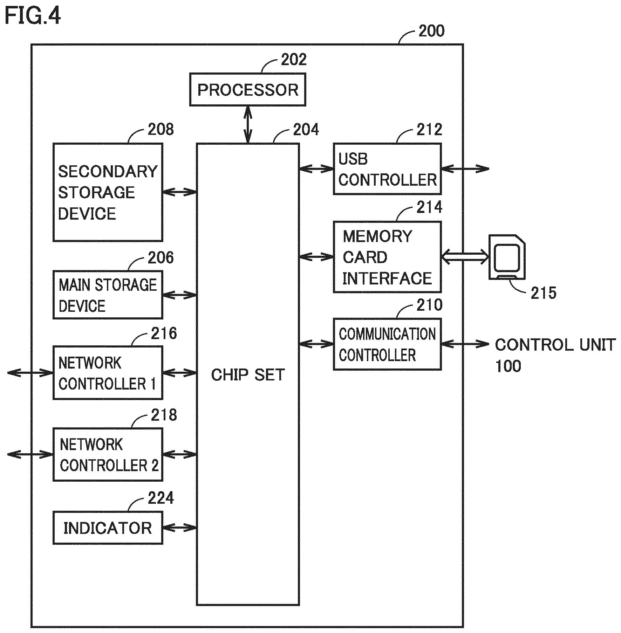

Fig. 4 is a schematic diagram illustrating a hardware configuration example of relay unit 200 constituting safety system 1 of the embodiment. Referring to Fig. 4, relay unit 200 includes a processor 202 such as a CPU or a GPU, a chip set 204, a main storage device 206, a secondary storage device 208, a communication controller 210, a communication interface 212, a memory card interface 214, a network controller 216, 218, and an indicator 224 as main components.

Processor 202 reads various programs stored in secondary storage device 208, develops the programs in main storage device 206, and executes the programs to implement various communication functions as described later. Chip set 204 mediates exchanges of data between processor 202 and each component, thereby implementing the processing of entire relay unit 200.

In addition to the system program, a communication processing program that operates on an execution environment provided by the system program is stored in secondary storage device 208.

Communication controller 210 is in charge of the data exchange with control unit 100. For example, similarly to control unit 100, a communication chip compatible with PCI Express, Ethernet, or the like can be adopted as communication controller 210.

Communication interface 212 is in charge of data exchange with any information processing device through USB connection.

Memory card interface 214 is configured such that memory card 215 is detachably attached, and can write the data such as the control program and various settings in memory card 215 or read the data such as the control program and various settings from memory card 215.

Each of network controllers 216, 218 is in charge of the data exchange with any device through the network. Network controllers 216,218 may adopt a general-purpose network protocol such as Ethernet.

Indicator 224 makes notification of an operating state or the like of relay unit 200, and is configured by one or a plurality of LEDs or the like arranged on an exposed surface of the unit.

Although Fig. 4 illustrates the configuration example in which processor 202 executing the program to provide necessary functions, some or all of these provided functions may be implemented using a dedicated hardware circuit (for example, an ASIC or a FPGA). Alternatively, a main part of relay unit 200 may be implemented using hardware (for example, an industrial personal computer based on a general-purpose personal computer) according to a general-purpose architecture. In this case, the plurality of OSs having different uses may be executed in parallel using a virtualization technology, and necessary applications may be executed on each OS.

### (b3: Safety unit 300)

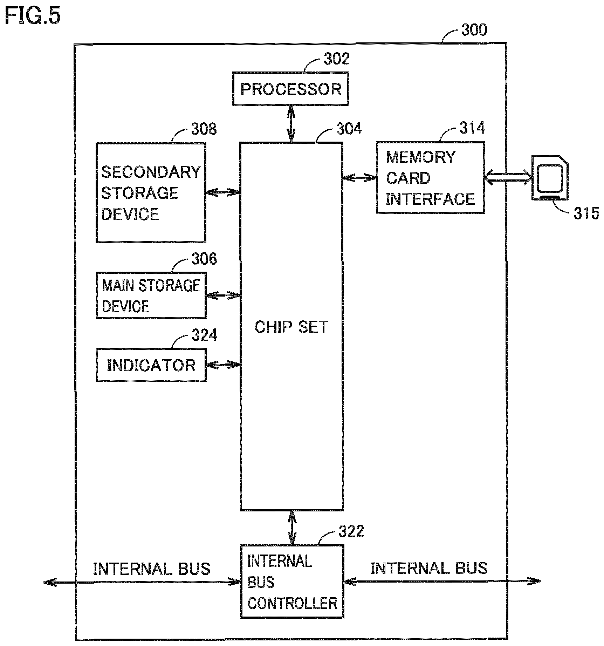

Fig. 5 is a schematic diagram illustrating a hardware configuration example of safety unit 300 constituting safety system 1 of the embodiment. Referring to Fig. 5, safety unit 300 includes a processor 302 such as a CPU and a GPU, a chip set 304, a main storage device 306, a secondary storage device 308, a memory card interface 314, an internal bus controller 322, and an indicator 324 as main components.

Processor 302 reads various programs stored in secondary storage device 308, develops the programs in main storage device 306, and executes the programs to implement the control arithmetic calculation regarding the safety control and various pieces of processing as described later. Chip set 304 mediates exchange of data between processor 302 and each component, thereby implementing processing of entire safety unit 300.

In addition to the system program, a control program that operates on an execution environment provided by the safety program is stored in secondary storage device 308.

Memory card interface 314 is configured such that memory card 315 is detachably attached, and can write the data such as the safety program and various settings in memory card 315 or read the data such as the safety program and various settings from memory card 315.

Internal bus controller 322 is in charge of the data exchange with control unit 100 through the internal bus 10 (see Fig. 2).

Indicator 324 makes the notification of an operation state of safety unit 300 and the like, and includes one or a plurality of LEDs and the like disposed on an exposed surface of the unit.

Although Fig. 5 illustrates the configuration example in which processor 302 executing the program to provide necessary functions, some or all of these provided functions may be implemented using a dedicated hardware circuit (for example, the ASIC or the FPGA). Alternatively, the main part of safety unit 300 may be implemented using hardware (for example, an industrial personal computer based on a general-purpose personal computer) according to a general-purpose architecture. In this case, the plurality of OSs having different uses may be executed in parallel using a virtualization technology, and necessary applications may be executed on each OS.

### <C. Maintenance for safety system 1>

Maintenance for safety system 1 of the embodiment will be describe below.

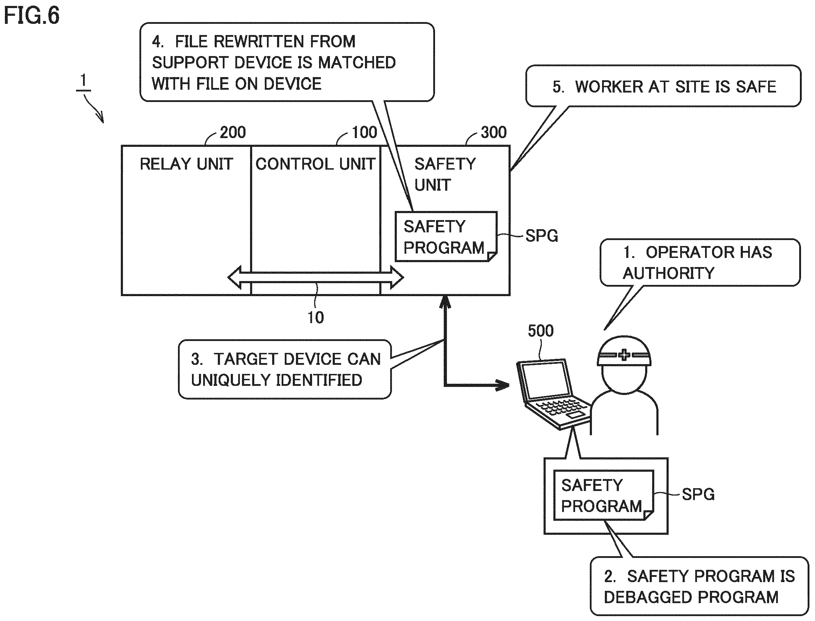

Fig. 6 is a view illustrating a maintenance requirement for safety system 1 of the embodiment. As a typical example, Fig. 6 assumes that the user program (safety program SPG) stored in safety unit 300 (hereinafter, also referred to as a "device") is rewritten by the user program (safety program SPG) produced by support device 500.

The maintenance requirement in Fig. 6 is defined in "6.11.2 Software Based Parameterization" of IEC 62061: 2005, or the like.
1. The operator who executes the maintenance has authority (for example, authorization check using a password).
2. Safety program SPG transmitted from support device 500 to the device is a debugged program.
3. The rewriting target device can be uniquely identified (for example, support device 500 are directly connected to the device. Alternatively, the target device is identified by a unique name or serial number of the target device).
4. The file rewritten from support device 500 matches the file on the device (for example, check using a checksum).
5. The worker at the site is safe (for example, a malfunction or a stop does not cause an injury)

More strict requirements as described above are imposed on the maintenance on safety unit 300 that executes the safety control instead of the maintenance on control unit 100 that executes the standard control.

In the embodiment, in addition to the execution of the maintenance at the site where safety system 1 is disposed, safety system 1 can be maintained by operating support device 500 disposed at a remote place. Hereinafter, the maintenance executed by operating support device 500 disposed at the remote place is also referred to as "remote maintenance".

"The operator who executes the maintenance has the authority" that is of requirement 1 means that the transmission source (alternatively, the sender) of safety program SPG is guaranteed to be correct.

"The rewriting target device can be uniquely identified" that is of requirement 3 means that the transfer destination of safety program SPG is guaranteed to be correct.

"The file rewritten from the support device 500 matches the file on the device" that is of requirement 4 means that safety program SPG after the transfer to safety unit 300 is guaranteed to be correct.

In order to implement the remote maintenance to safety unit 300, preferably requirement 3 described above is particularly considered. Further, preferably requirement 5 is also considered.

A configuration for implementing the remote maintenance of the safety system 1 will be described below.

### <D. Hardware configuration example of support device 500>

A hardware configuration example of support device 500 connected to safety system 1 of the embodiment will be described below.

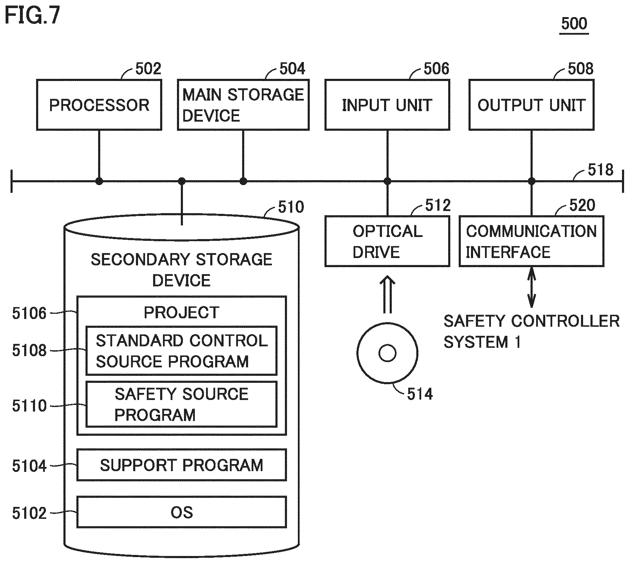

Fig. 7 is a schematic diagram illustrating the hardware configuration example of support device 500 connected to safety system 1 of the embodiment. For example, support device 500 is implemented using hardware (for example, a general-purpose personal computer) having general-purpose architecture.

Referring to Fig. 7, support device 500 includes a processor 502 such as a CPU and a GPU, a main storage device 504, an input unit 506, an output unit 508, a secondary storage device 510, an optical drive 512, and a communication interface 520. These components are connected through a processor bus 518.

The processor 502 reads a program (as an example, an OS 5102 and a support program 5104) stored in secondary storage device 510, develops the program in main storage device 504, and executes the program, thereby implementing various pieces of processing as described later.

Secondary storage device 510 stores support program 5104 providing the function as support device 500 in addition to OS 5102 implementing basic functions. Support program 5104 is executed by an information processing device (substantially processor 502) that is a computer to implement support device 500 of the embodiment.

Secondary storage device 510 stores a project 5106 produced by a user in a development environment provided by execution of support program 5104. Furthermore, secondary storage device 510 may store keys (a secret key and a public key), certificates, and the like as described later.

In the embodiment, support device 500 provides the development environment in which the setting for each device included in safety system 1 and the production of the program executed in each device can be integrally performed. Project 5106 includes data generated by such an integrated development environment. Typically, project 5106 includes a standard control source program 5108 and a safety source program 5112.

Standard control source program 5108 is converted into an object code, transferred to control unit 100, and stored as a standard control program. Safety source program 5110 is converted into an object code, transferred to safety unit 300, and stored as a safety program.

Input unit 506 includes a keyboard and a mouse, and receives user operation. Output unit 508 includes a display, various indicators, and a printer, and outputs a processing result and the like from processor 502.

Communication interface 520 exchanges data with safety system 1 through an arbitrary communication medium such as USB or Ethernet.

Support device 500 includes an optical drive 512, and a program stored in a recording medium 514 (for example, an optical recording medium such as a digital versatile disc (DVD)) that stores a non-transiently computer-readable command is read from recording medium 514, and installed in secondary storage device 510 or the like.

Support program 5104 and the like executed by support device 500 may be installed through a computer-readable recording medium 514, or installed by performing download of support program 5104 from a server device or the like on a network. Functions provided by support device 500 of the embodiment may be implemented using a part of modules provided by the OS.

Although Fig. 7 illustrates the configuration example in which processor 502 executing the program to provide functions necessary for support device 500, some or all of these provided functions may be implemented using a dedicated hardware circuit (for example, the ASIC or the FPGA).

During the operation of safety system 1, support device 500 may be removed from safety system 1.

### <E. Configuration for ensuring that transfer destination of safety program is correct (requirement 3)>

First, a configuration for implementing "the rewriting target device can be uniquely identified" that is requirement 3 will be described.

### (el: Problem)

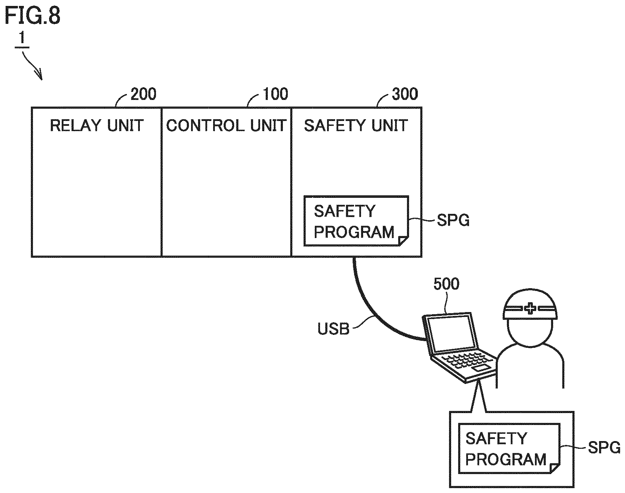

Fig. 8 is a view illustrating maintenance executed by directly connecting safety system 1 and support device 500 of the embodiment. Referring to Fig. 8, when support device 500 and safety system 1 (safety unit 300) are directly connected at the site, the operator who operates support device 500 can visually confirm the device (safety unit 300) of the connection destination, so that the rewriting target device can uniquely be identified by the visual observation and the connection operation.

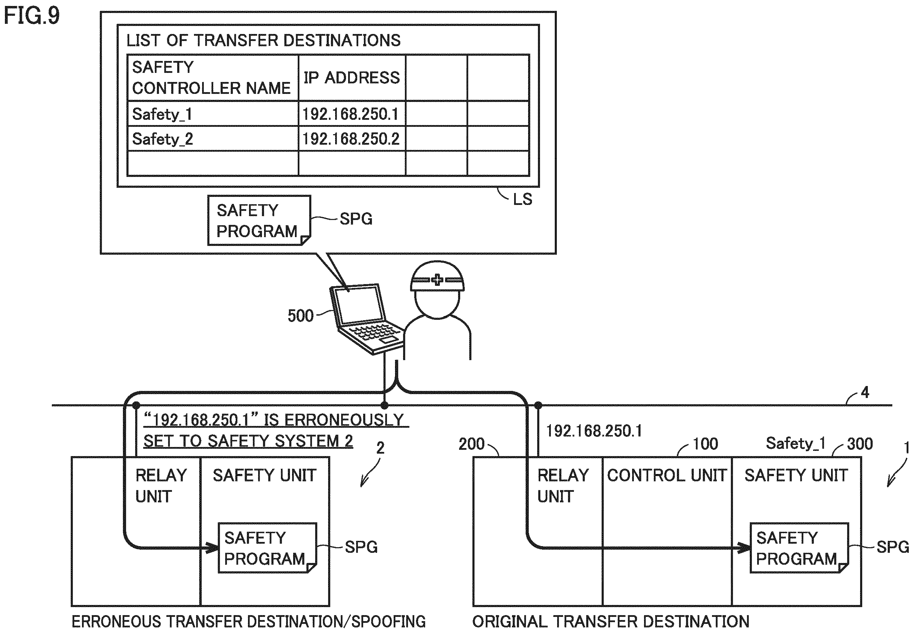

Fig. 9 is a view illustrating a problem in remote maintenance from support device 500 with respect to safety system 1. Referring to Fig. 9, it is assumed that support device 500 is electrically connected to safety system 1 through network 4.

In network 4, safety system 1 is specified by the network address (typically, the IP address) allocated to relay unit 200.

Support device 500 has a list LS in which the name of the device (safety unit 300) serving as the previously-registered transfer destination is associated with the IP address, and the operator refers to list LS to select safety unit 300 serving as the transfer destination. In the example of Fig. 9, "192.168.250.1" (Safety _ 1) is selected as the IP address. Support device 500 transfers safety program SPG to the device having the selected IP address according to the operation of the operator.

At this point, the IP address can be arbitrarily set to each device, or may be dynamically assigned by a router or the like. Accordingly, there is a possibility that "192.168.250.1" is erroneously set to another safety system 2.

Alternatively, another safety system 2 may be falsified to be the transfer destination by spoofing or the like.

In this way, only the specification of the IP address cannot guarantee that the transfer destination of safety program SPG is correct because of the erroneous setting or the spoofing. That is, even when safety program SPG is transferred to the erroneous system, there is a possibility that it is not noticed.

### (e2: Solution mode 1)

A mode in which the encryption is executed using a key will be described as a solution mode 1 to the problem in Fig. 8.

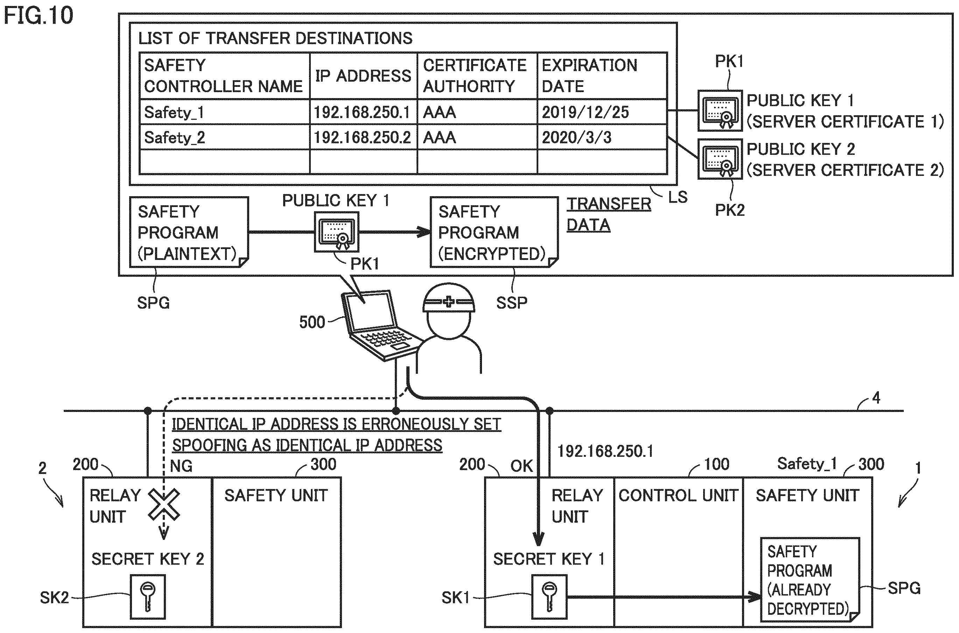

Fig. 10 is a view illustrating one mode of remote maintenance from support device 500 to safety system 1 of the embodiment. In the configuration of Fig. 10, relay unit 200 of safety system 1 holds the electronic key, and support device 500 encrypts the data necessary for the maintenance (typically, safety program SPG) to transfer the encrypted data to relay unit 200 such that the data can be encrypted using the electronic key held by relay unit 200.

More specifically, the key pair including a secret key and a public key according to a public key infrastructure is previously prepared for safety system 1. The secret key is stored in relay unit 200, and the corresponding public key is stored in support device 500. That is, relay unit 200 holds the secret key as the electronic key, and support device 500 holds the public key paired with the secret key.

For example, safety system 1 (relay unit 200) having "192.168.250.1" (Safety _ 1) as the IP address stores secret a secret key SKI, and the entry of "192.168.250.1" in list LS held by support device 500 is associated with a corresponding public key PK1. In order to prevent the forgery of public key PK1, the server certificate generated by the authentication of the public key PK1 by the certificate authority may be stored in support device 500.

In this manner, relay unit 200 holds secret key SK1 as the electronic key. In addition, support device 500 holds at least one of public key PK1 paired with secret key SK1 and a server electronic certificate issued to public key PK1.

In the remote maintenance, when transferring safety program SPG to the device having the selected IP address according to the operation of the operator, support device 500 encrypts safety program SPG using the public key of the selected transfer destination. An encrypted safety program SSP (transfer data) generated by the encryption is transferred to the transfer destination.

When encrypted safety program SSP (transfer data) is transferred to safety system 1 that is the original transfer destination, decryption can be executed using secret key SK1 stored in relay unit 200 of safety system 1.

On the other hand, when encrypted safety program SSP (transfer data) is transferred to safety system 2 that is the erroneous transfer destination, the decryption cannot be executed using a secret key SK2 stored in relay unit 200 of safety system 2. Perhaps, it is assumed that relay unit 200 of safety system 2 does not hold any secret key. In this case, the transfer data cannot also be decrypted.

Even when the transfer data is received by some method, safety system 2 cannot decrypted the transfer data.

In this way, support device 500 can decrypt in the transfer destination the transfer data only when the transfer data is transferred to safety system 1 having the key previously associated with the selected transfer destination, so that safety program SPG is not transmitted to the erroneous transfer destination. Thus, safety program SPG can be transferred to the correct transfer destination even when the setting of the erroneous IP address or the spoofing of the IP address is executed in the transfer destination. When the data (encrypted safety program SSP) transferred from support device 500 can be decrypted using secret key SK1, relay unit 200 transfers the decrypted data (safety program SPG) to safety unit 300.

Relay unit 200 may transfer decrypted safety program SPG to safety unit 300 after executing virus scan or the like on decrypted safety program SPG. This is consideration of the possibility of virus infection immediately before the encryption by support device 500.

### (e3: Solution mode 2)

In the solution mode 1 described above, the configuration in which the transfer data is generated using the public key of the transfer destination has been exemplified, but a common key may be further used from the viewpoint of improving efficiency of the processing regarding the encryption and the decryption to enhance the transfer speed.

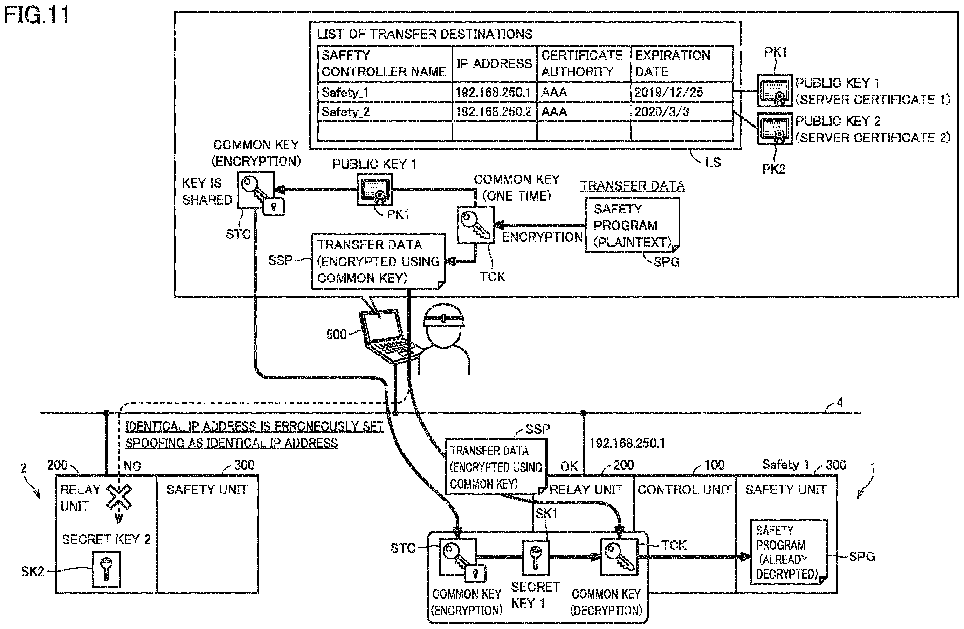

Fig. 11 is a view illustrating another mode of the remote maintenance from support device 500 to safety system 1 of the embodiment. Also in the configuration of Fig. 11, similarly to the configuration in Fig. 10, a key pair including the secret key and the public key is previously prepared for safety system 1.

First, safety program SPG is encrypted by a common key TCK that is a one-time key generated every time in support device 500, and encrypted safety program SSP (transfer data) is generated. In addition, common key TCK is encrypted using the public key of the selected transfer destination, thereby generating an encrypted common key STC.

Encrypted safety program SSP and encrypted common key STC are transferred to the transfer destination selected from support device 500.

In this way, support device 500 generates common key TCK that is the one-time key when safety program SPG needs to be transferred. Then, support device 500 encrypts common key TCK that is the one-time key using the public key (encrypted common key STC) and transmits encrypted common key STC to relay unit 200. In addition, support device 500 encrypts safety program SPG using common key TCK (encrypted safety program SSP), and transmits encrypted safety program SSP to relay unit 200.

Relay unit 200 of safety system 1 of the transfer destination decrypts encrypted common key STC received from support device 500 into common key TCK using secret key SK1 of the own device. Relay unit 200 of safety system 1 of the transfer destination decrypts encrypted safety program SSP (transfer data) received from support device 500 into safety program SPG using decrypted common key TCK.

On the other hand, when encrypted safety program SSP and encrypted common key STC are transferred to safety system 2 that is the erroneous transfer destination, the decryption cannot be executed using secret key SK2 stored in relay unit 200 of safety system 2. Perhaps, it is assumed that relay unit 200 of safety system 2 does not hold any secret key. In this case, the transfer data cannot also be decrypted.

Even when the data from support device 500 is received by some method, the transferred data cannot be decrypted in safety system 2.

In this way, support device 500 can decrypt in the transfer destination the transfer data only when the transfer data is transferred to safety system 1 having the key previously associated with the selected transfer destination, so that safety program SPG is not transmitted to the erroneous transfer destination. Thus, safety program SPG can be transferred to the correct transfer destination even when the setting of the erroneous IP address or the spoofing of the IP address is executed in the transfer destination.

### (e4: Use of certificate authority)

The public key of each device used by support device 500 may be directly or indirectly acquired from safety system 1 (alternatively, relay unit 200) that becomes the transfer destination. Alternatively, the public key may be registered in a certificate authority (CA), and the server certificate for the public key issued by the certificate authority may be used as the public key of each device. Forgery of the public key and the like can be prevented using the certificate authority.

### <F. Configuration for ensuring safety of site workers (requirement 5)>

First, a configuration for implementing "safety of the worker at the site" that is of requirement 5 will be described.

### (f1: Problem)

In the solution modes of Figs. 10 and 11, when the operator operates support device 500, new safety program SPG is transferred to safety unit 300. Normally, the operator of support device 500 executes the rewriting operation of safety program SPG while making contact with the worker in charge of the site where safety unit 300 is disposed, so that there is no problem in safety for the worker.

However, more preferably such exchange is secured to the system. That is, it is preferable to construct a system capable of ensuring that worker at the site is safe.

### (f2: Solution mode 1)

In order to reflect the new safety program SPG transferred from the support device 500 in the safety unit 300, a configuration example in which the explicit operation of the worker in the site is set as the condition is described as a solution mode 1 in which the requirement 5 is guaranteed in the system.

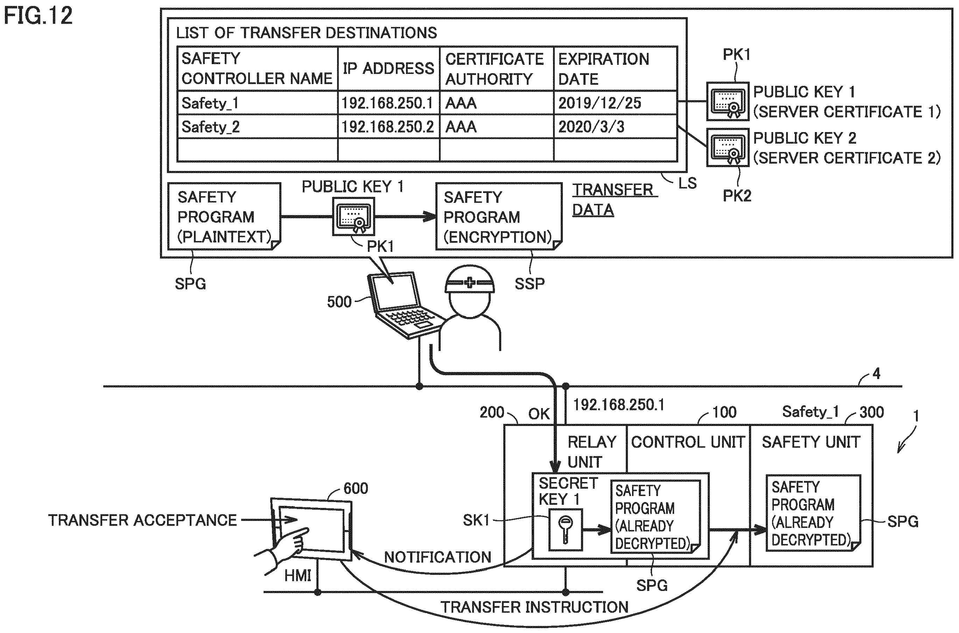

Fig. 12 is a view illustrating an example of an improved mode of the remote maintenance from support device 500 to safety system 1 of the embodiment. The configuration in Fig. 12 corresponds to an improvement of the configuration in Fig. 10. Safety system 1 in Fig. 12 is connected to a display operation device 600 that receives the operation of the worker at the site. As a specific example, display operation device 600 is network-connected to relay unit 200.

In the configuration of Fig. 12, safety program SPG transferred from support device 500 in the remote maintenance is not directly transferred to safety unit 300, but temporarily stored in relay unit 200. Then, safety program SPG is transferred from relay unit 200 to safety unit 300 in response to an explicit instruction from the worker at the site.

More specifically, in the remote maintenance, support device 500 encrypts safety program SPG using the public key of the selected transfer destination when transferring safety program SPG to the device having the selected IP address according to the operation of the operator. An encrypted safety program SSP (transfer data) generated by the encryption is transferred to the transfer destination. When encrypted safety program SSP (transfer data) is transferred to safety system 1 that is the original transfer destination, decryption can be executed using secret key SK1 stored in relay unit 200 of safety system 1.

When the transfer data can be decrypted into safety program SPG using secret key SK1, relay unit 200 of safety system 1 temporarily stores decrypted safety program SPG in relay unit 200. Relay unit 200 of safety system 1 notifies display operation device 600 of the information about decrypted safety program SPG.

The worker at the site refers to display operation device 600 to check validity of safety program SPG, and instructs a transfer acceptance to display operation device 600 after checking that workers at the site including the worker at the site are safe.
Display operation device 600 transmits a transfer instruction to relay unit 200 according to the transfer acceptance.

Relay unit 200 transfers previously-stored safety program SPG to safety unit 300 according to the transfer instruction from display operation device 600. Thus, the processing for rewriting safety program SPG is completed.

As described above, relay unit 200 transfers safety program SPG transferred from support device 500 to safety unit 300 subject to the instruction from the worker at the site. The safety of the worker at the site can be more reliably ensured by setting the reflection of safety program SPG in safety unit 300 to the condition on the explicit operation of the worker in the site.

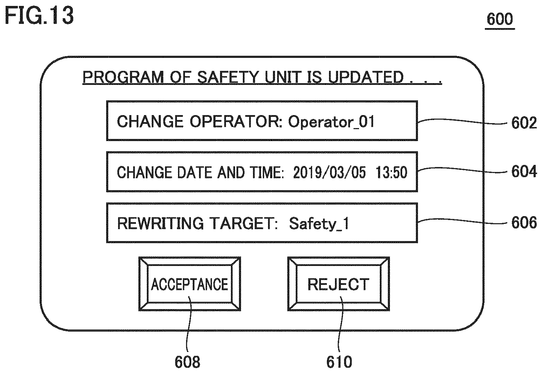

Fig. 13 is a schematic diagram illustrating an example of a user interface presented to display operation device 600 in the remote maintenance in Fig. 12. Referring to Fig. 13, display operation device 600 presents the information about safety program SPG from relay unit 200. In other words, display operation device 600 presents the information about safety program SPG transferred from support device 500 to the user.

As an example, the user interface screen provided by display operation device 600 includes information 602 indicating a change operator of safety program SPG, information 604 indicating change date and time of safety program SPG, and information 606 indicating the transfer destination of safety program SPG.

The worker at the site checks the information presented on display operation device 600 and checks that the workers at the site including the worker at the site are safe, and then presses an acceptance button 608 on display operation device 600. In response to the pressing of acceptance button 608, display operation device 600 transmits the transfer instruction to relay unit 200. Then, safety program SPG is transferred from relay unit 200 to safety unit 300.

In this manner, the information about safety program SPG transferred from support device 500 is presented on display operation device 600. Subsequently, the worker at the site accepts the transfer of safety program SPG after checking the validity of safety program SPG and the safety of the workers at the site. Subsequently, relay unit 200 transfers safety program SPG to safety unit 300 in response to the transfer acceptance from the worker at the site.

On the other hand, when the worker at the site presses a reject button 610 for some reason, display operation device 600 transmits a transfer stop to relay unit 200. Then, relay unit 200 may discard stored safety program SPG. In this manner, relay unit 200 may discard safety program SPG transferred from support device 500 in response to the instruction to reject the transfer from the user.

In the user interface of Fig. 13, a user who updated safety program SPG, an update date and time of safety program SPG, and the transfer destination of safety program SPG are presented as the information about safety program SPG. Alternatively, at least a part of the information may be presented instead of the whole information.

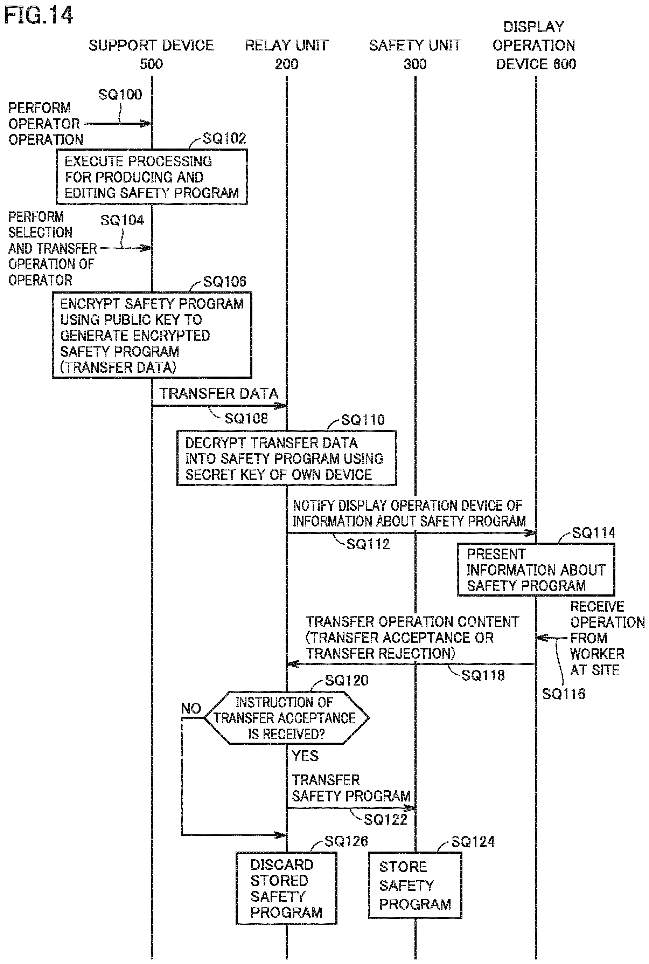

Fig. 14 is a sequence diagram illustrating a processing procedure in the remote maintenance in Fig. 12. Referring to Fig. 14, support device 500 executes processing for producing and editing safety program SPG according to the operation (sequence SQ100) of support device 500 by the operator (sequence SQ102).

Subsequently, in accordance with the operation (sequence SQ104) of selecting and transferring the transfer destination by the operator, support device 500 is network-connected to selected relay unit 200, and encrypts safety program SPG using the public key of the transfer destination to generate encrypted safety program SSP (transfer data) (sequence SQ106). Support device 500 transfers the transfer data to the selected transfer destination (sequence SQ108).

When receiving the transfer data from support device 500, relay unit 200 of the transfer destination decrypts the received data into safety program SPG using secret key SKI of the own device (sequence SQ110).

Relay unit 200 notifies display operation device 600 of the information about decrypted safety program SPG (sequence SQ112). Display operation device 600 presents the information about safety program SPG based on the information from relay unit 200 (sequence SQ114). Furthermore, when receiving the operation from the worker at the site (sequence SQ116), display operation device 600 transmits the content of the received operation (transfer acceptance or transfer rejection) to relay unit 200 (sequence SQ118).

When receiving the instruction of the transfer acceptance from display operation device 600 (YES in sequence SQ120), relay unit 200 transfers decrypted safety program SPG to safety unit 300 (sequence SQ122). The transfer of safety program SPG from relay unit 200 to safety unit 300 is executed through internal bus 10. Safety unit 300 stores safety program SPG from relay unit 200 (sequence SQ124). Safety unit 300 executes the safety control in accordance with stored safety program SPG.

Thus, the remote maintenance from support device 500 to safety unit 300 is completed.

On the other hand, when receiving the instruction to reject the transfer from display operation device 600 (NO in sequence SQ120), relay unit 200 discards stored safety program SPG (sequence SQ126). In this case, the remote maintenance from support device 500 to safety unit 300 ends halfway.

### (f3: Solution mode 2)

A technical idea similar to that of the solution mode 1 may also be applied to the configuration in Fig. 11. That is, in the configuration of Fig. 11, the explicit operation of the worker at the site may be used as the condition in order to reflect new safety program SPG transferred from support device 500 in safety unit 300,.

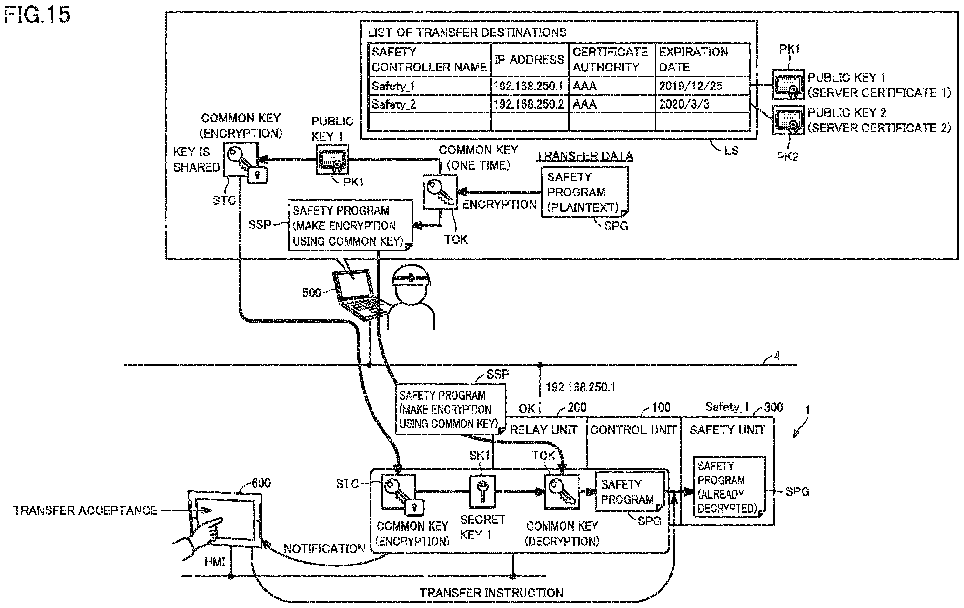

Fig. 15 is a view illustrating another example of the improved mode of the remote maintenance from support device 500 to safety system 1 of the embodiment. The configuration in Fig. 15 corresponds to an improvement of the configuration in Fig. 11. Safety system 1 in Fig. 15 is connected to display operation device 600 that receives the operation of the worker at the site.

In the configuration of Fig. 15, support device 500 encrypts safety program SPG using common key TCK that is the one-time key generated every time, and generates encrypted safety program SSP (transfer data). In addition, common key TCK is encrypted using the public key of the selected transfer destination, thereby generating an encrypted common key STC.

Encrypted safety program SSP and encrypted common key STC are transferred to the transfer destination selected from support device 500. Support device 500 encrypts the data necessary for the maintenance using common key TCK, encrypts common key TCK such that common key TCK can be decrypted using the key (secret key SK1) held by relay unit 200, and transmits common key TCK to relay unit 200.

Relay unit 200 of safety system 1 of the transfer destination decrypts encrypted common key STC received from support device 500 into common key TCK using secret key SK1 of the own device. Relay unit 200 of safety system 1 of the transfer destination decrypts encrypted safety program SSP (transfer data) received from support device 500 into safety program SPG using decrypted common key TCK.

When relay unit 200 of safety system 1 can decrypt encrypted safety program SSP into safety program SPG, relay unit 200 temporarily stores decrypted safety program SPG in relay unit 200. Relay unit 200 of safety system 1 notifies display operation device 600 of the information about decrypted safety program SPG.

The worker at the site refers to display operation device 600 to check validity of safety program SPG, and instructs a transfer acceptance to display operation device 600 after checking that workers at the site including the worker at the site are safe.
Display operation device 600 transmits a transfer instruction to relay unit 200 according to the transfer acceptance.

Relay unit 200 transfers previously-stored safety program SPG to safety unit 300 according to the transfer instruction from display operation device 600. Thus, the processing for rewriting safety program SPG is completed.

In this way, the safety of the worker at the site can be more reliably ensured by setting the reflection of safety program SPG in safety unit 300 to the condition on the explicit operation of the worker in the site.

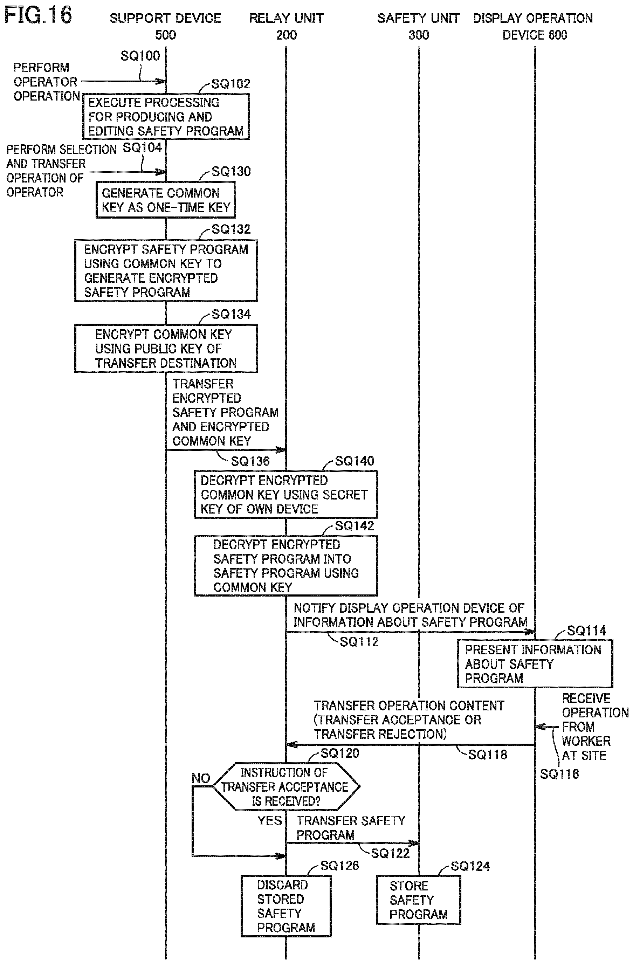

Fig. 16 is a sequence diagram illustrating the processing procedure in the remote maintenance in Fig. 15. Referring to Fig. 16, support device 500 executes the processing for producing and editing safety program SPG according to the operation (sequence SQ100) of support device 500 by the operator (sequence SQ102).

Subsequently, support device 500 generates common key TCK as the one-time key according to the selection and transfer operation of the transfer destination by the operator (sequence SQ104) (sequence SQ130). Then, support device 500 encrypts safety program SPG using generated common key TCK to generate encrypted safety program SSP (transfer data) (sequence SQ132). Support device 500 encrypts common key TCK using the public key of the transfer destination to generate encrypted common key STC (sequence SQ134).

Finally, support device 500 transfers encrypted safety program SSP and encrypted common key STC to the selected transfer destination (sequence SQ136).

When receiving encrypted common key STC from support device 500, relay unit 200 of the transfer destination decrypts received encrypted common key STC into common key TCK using secret key SK1 of the own device (sequence SQ140).

Relay unit 200 decrypts encrypted safety program SSP (transfer data) into safety program SPG using common key TCK (sequence SQ142).

Relay unit 200 notifies display operation device 600 of the information about decrypted safety program SPG (sequence SQ112). Display operation device 600 presents the information about safety program SPG based on the information from relay unit 200 (sequence SQ114). Furthermore, when receiving the operation from the worker at the site (sequence SQ116), display operation device 600 transmits the content of the received operation (transfer acceptance or transfer rejection) to relay unit 200 (sequence SQ118).

When receiving the instruction of the transfer acceptance from display operation device 600 (YES in sequence SQ120), relay unit 200 transfers decrypted safety program SPG to safety unit 300 (sequence SQ122). The transfer of safety program SPG from relay unit 200 to safety unit 300 is executed through internal bus 10. Safety unit 300 stores safety program SPG from relay unit 200 (sequence SQ124). Safety unit 300 executes the safety control in accordance with stored safety program SPG.

Thus, the remote maintenance from support device 500 to safety unit 300 is completed.

On the other hand, when receiving the instruction to reject the transfer from display operation device 600 (NO in sequence SQ120), relay unit 200 discards stored safety program SPG (sequence SQ126). In this case, the remote maintenance from support device 500 to safety unit 300 ends halfway.

### (f4: Solution mode 3)

In the above-described configuration, authentication processing may be further added in display operation device 600. The instruction to transfer safety program SPG to safety unit 300 can be made more reliable by the addition of the authentication processing.

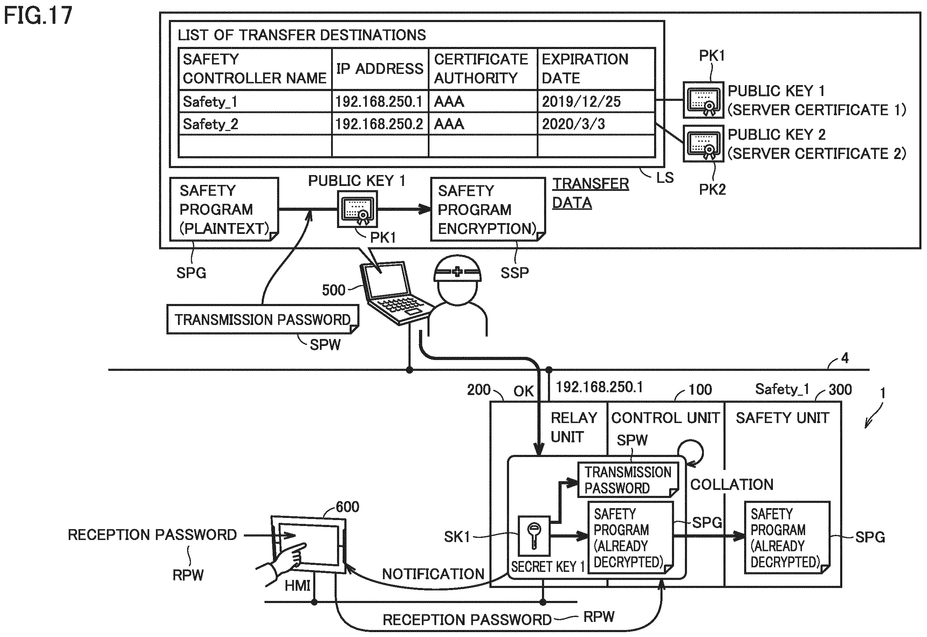

Fig. 17 is a view illustrating still another example of the improved mode of the remote maintenance from support device 500 to safety system 1 of the embodiment. The configuration in Fig. 17 corresponds to a configuration obtained by adding the authentication processing to the configuration in Fig. 12.

In the configuration of Fig. 17, a previously-set transmission password SPW is given to safety program SPG transferred from support device 500 in the remote maintenance. That is, support device 500 gives the password input from the operator to safety program SPG, and transfers the password to relay unit 200.

On the other hand, the worker at the site refers to display operation device 600 to check the validity of safety program SPG, and inputs a reception password RPW to display operation device 600 after checking that the workers at the site including the worker at the site are safe. Safety program SPG is transferred from relay unit 200 to safety unit 300 only when reception password RPW input from the worker at the site matches transmission password SPW given to safety program SPG.

More specifically, in the remote maintenance, the operator inputs transmission password SPW to support device 500 before or during the transfer of safety program SPG. Transmission password SPW is usually shared with workers at the site. Support device 500 encrypts safety program SPG and input transmission password SPW using the public key of the selected transfer destination with respect to the device having the selected IP address according to the operation of the operator. The transfer data generated by the encryption is transferred to the transfer destination. When encrypted safety program SSP (transfer data) is transferred to safety system 1 that is the original transfer destination, decryption can be executed using secret key SK1 stored in relay unit 200 of safety system 1.

When the transfer data can be decrypted into safety program SPG and transmission password SPW using secret key SK1, relay unit 200 of safety system 1 temporarily stores decrypted safety program SPG and transmission password SPW in relay unit 200. Relay unit 200 of safety system 1 notifies display operation device 600 of the information about decrypted safety program SPG.

The worker at the site refers to display operation device 600 to check the validity of safety program SPG, and inputs reception password RPW to display operation device 600 after checking that the workers at the site including the worker are safe. Input reception password RPW is transmitted to relay unit 200.

Relay unit 200 collates reception password RPW from display operation device 600 with previously-stored transmission password SPW. When both the passwords matches each other, relay unit 200 transfers safety program SPG to safety unit 300. Thus, the processing for rewriting safety program SPG is completed. As described above, relay unit 200 transfers safety program SPG transferred from support device 500 to safety unit 300 on condition that reception password RPW input from the worker at the site matches transmission password SPW.

On the other hand, when reception password RPW from display operation device 600 does not match previously-stored transmission password SPW, relay unit 200 may discard stored safety program SPG.

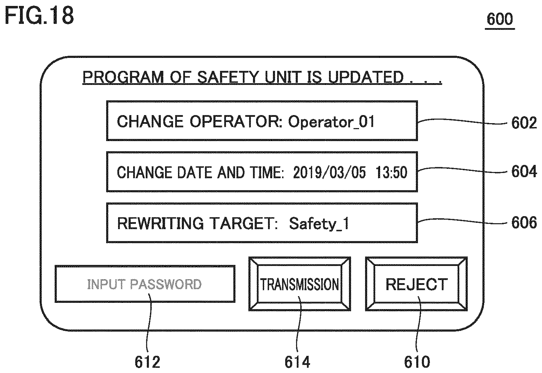

Fig. 18 is a schematic diagram illustrating an example of the user interface presented to display operation device 600 in the remote maintenance in Fig. 17. Referring to Fig. 18, display operation device 600 presents the information about safety program SPG from relay unit 200, and urges the input of reception password RPW.
As an example, the user interface screen provided by display operation device 600 includes information 602 indicating the change operator of safety program SPG, information 604 indicating the change date and time of safety program SPG, information 606 indicating the transfer destination of safety program SPG, and a password input field 612.

The worker at the site checks the information presented on display operation device 600 and inputs reception password RPW to password input field 612 after checking that the workers at the site including the worker at the site are safe. Then, a transmission button 614 is pressed. In response to the pressing of transmission button 614, display operation device 600 transmits reception password RPW input in password input field 612 to relay unit 200. Then, relay unit 200 collates reception password RPW from display operation device 600 with stored transmission password SPW. When both the passwords match each other, relay unit 200 transfers safety program SPG to safety unit 300.

On the other hand, when the worker at the site presses a reject button 610 for some reason, display operation device 600 transmits a transfer stop to relay unit 200. Then, relay unit 200 may discard stored safety program SPG.

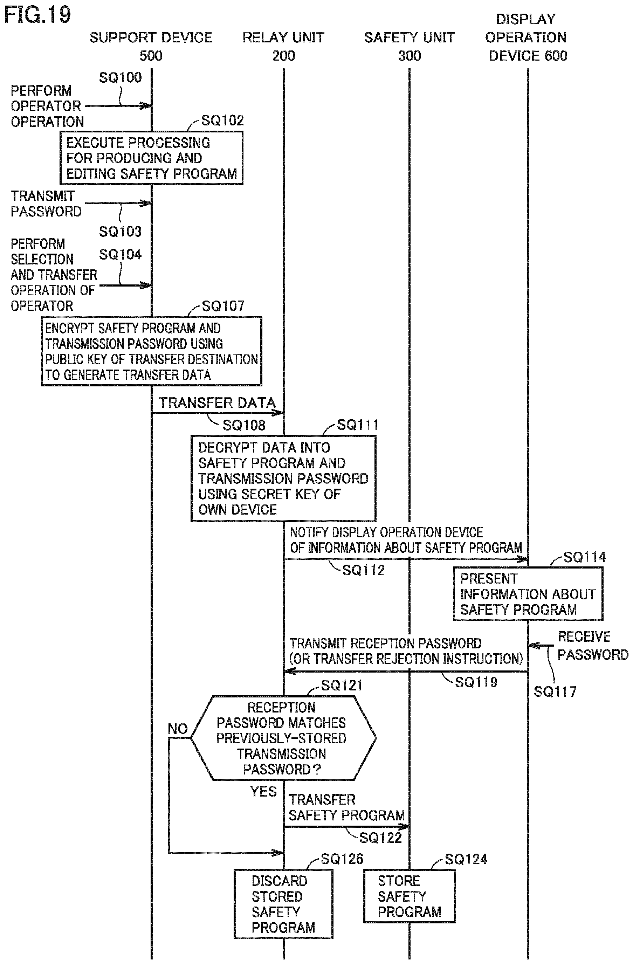

Fig. 19 is a sequence diagram illustrating the processing procedure in the remote maintenance in Fig. 17. Referring to Fig. 19, support device 500 executes the processing for producing and editing safety program SPG according to the operation (sequence SQ100) of support device 500 by the operator (sequence SQ102). The operator inputs transmission password SPW to be given to safety program SPG (sequence SQ103).

Subsequently, in accordance with the operation (sequence SQ104) of selecting and transferring the transfer destination by the operator, support device 500 establishes network connection to selected relay unit 200, and encrypts safety program SPG and transmission password SPW using the public key of the transfer destination to generate encrypted transfer data (sequence SQ107). Support device 500 transfers the transfer data to the selected transfer destination (sequence SQ108).

When receiving the transfer data from support device 500, relay unit 200 of the transfer destination decrypts the received data into safety program SPG and transmission password SPW using secret key SK1 of the own device (sequence SQ111).

Relay unit 200 notifies display operation device 600 of the information about decrypted safety program SPG (sequence SQ112). Display operation device 600 presents the information about safety program SPG based on the information from relay unit 200 (sequence SQ114). Furthermore, when receiving reception password RPW from the worker at the site (sequence SQ117), display operation device 600 transmits reception password RPW to relay unit 200 (sequence SQ119). Sometimes a transfer rejection instruction is transmitted to relay unit 200.

When reception password RPW received from display operation device 600 matches previously-stored transmission password SPW (YES in sequence SQ121), relay unit 200 transfers decrypted safety program SPG to safety unit 300 (sequence SQ122). The transfer of safety program SPG from relay unit 200 to safety unit 300 is executed through internal bus 10. Safety unit 300 stores safety program SPG from relay unit 200 (sequence SQ124). Safety unit 300 executes the safety control in accordance with stored safety program SPG.

Thus, the remote maintenance from support device 500 to safety unit 300 is completed.

On the other hand, when reception password RPW received from control panel 600 does not match previously-stored transmission password SPW (NO in sequence SQ121), relay unit 200 discards stored safety program SPG (sequence SQ126). In this case, the remote maintenance from support device 500 to safety unit 300 ends halfway.

As described above, support device 500 transmits the transmission data to relay unit 200 while including arbitrary transmission password SPW input by the operator in the transmission data. Display operation device 600 presents the information about safety program SPG transmitted from support device 500, and urges the worker at the site to input reception password RPW. When the password authentication is successful based on reception password RPW input by the worker at the site, the transfer of safety program SPG is started from relay unit 200 to safety unit 300. On the other hand, when the password authentication fails based on the reception password RPW input by the worker at the site, safety program SPG is not transferred to safety unit 300.

As described above, because the reflection of safety program SPG in safety unit 300 is performed on the condition that the password matches between the operator of support device 500 and the worker at the site, the possibility of the erroneous transfer of safety program SPG to safety unit 300 can be almost eliminated.

### (f5: Modifications of solution mode 3)

The solution mode 3 can be modified as follows.

(1) The solution mode 3 has been described based on the configuration in Fig. 12, and is similarly applicable to the configuration in Fig. 15. Furthermore, the configuration is not limited to the configuration in Figs. 12 and 15, but any configuration may be adopted as long as the configuration can collate the passwords input at support device 500 and the site.

(2) In the solution mode 3, the configuration in which relay unit 200 executes the password authentication using transmission password SPW and reception password RPW is exemplified, but any subject may execute the password authentication. For example, the password authentication may be executed by display operation device 600 instead of relay unit 200, or the password authentication may be executed by control unit 100 or safety unit 300. Furthermore, the password authentication may be executed in an arbitrary information processing device disposed separately from safety system 1.

As described above, the password authentication may be executed by an arbitrary execution subject according to the system configuration.

(3) Any mode can be adopted as transmission password SPW and reception password RPW. For example, an arbitrary character string may be adopted as the password, or the password may be arbitrarily selected from a plurality of candidates prepared previously (numbers, pictures, photographs, and the like). In the solution mode 3, transmission password SPW and reception password RPW are not intended to conceal the information, but are intended to check the communication between the operator of support device 500 and the worker at the site, so that strict encryption strength is not required.

Furthermore, support device 500 may randomly select or determine transmission password SPW. In this case, when transmission password SPW is determined or selected by support device 500, the operator of support device 500 notifies the worker at the site of transmission password SPW by means such as a telephone. At this point, the operator of support device 500 is assumed to contact the transfer schedule of safety program SPG to safety unit 300. The worker at the site inputs reception password RPW to display operation device 600 according to the contact content from the operator of support device 500. By adopting such a method for generating transmission password SPW, the communication between the operator of support device 500 and the worker at the site can be more reliably executed.

As described above, transmission password SPW may be any of an arbitrary character string, an arbitrary one of predetermined candidates, and a value randomly determined by support device 500.

(4) Instead of the configuration in which the authentication is executed using transmission password SPW and reception password RPW, the user authentication for the worker at the site who operates display operation device 600 may be used.

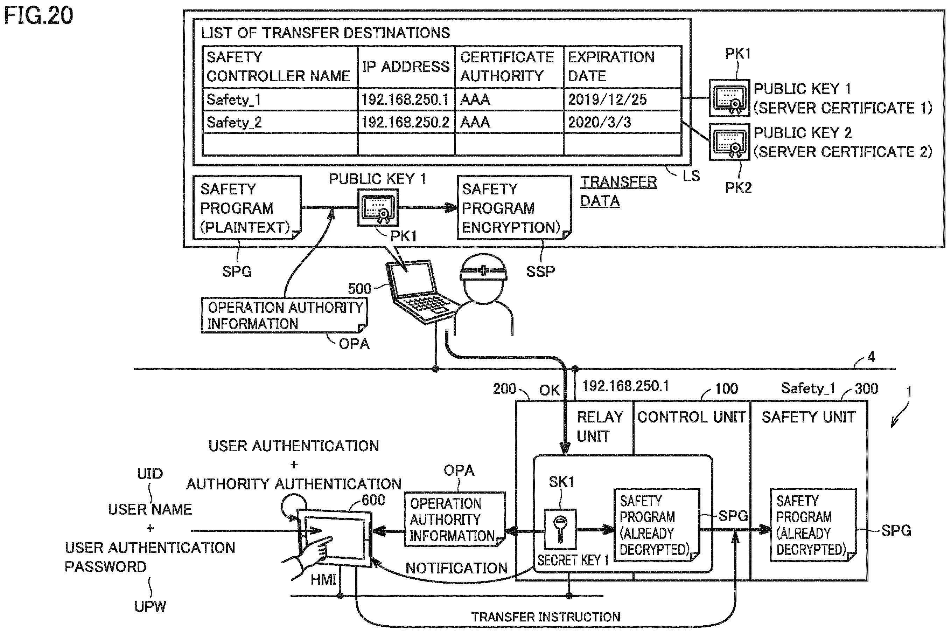

Fig. 20 is a view illustrating still another example of the improved mode of the remote maintenance from support device 500 to safety system 1 of the embodiment. The configuration in Fig. 20 corresponds to a configuration obtained by adding the user authentication processing and the authority authentication processing to the configuration in Fig. 12.

In the remote maintenance of Fig. 20, the transfer instruction can be transmitted only when the worker who operates display operation device 600 has the operation authority.

In the configuration of Fig. 20, previously-set operation authority information OPA is given to safety program SPG transferred from support device 500 in the remote maintenance. Operation authority information OPA received by relay unit 200 is transferred to display operation device 600.

On the other hand, when operating display operation device 600, the worker at the site inputs an own user name UID and a user authentication password UPW. Display operation device 600 executes user authentication based on input user name UID and user authentication password UPW. When the user authentication is successful, display operation device 600 refers to operation authority information OPA received from relay unit 200 to determine whether the worker whose user authentication is successful has the operation authority (authority authentication).

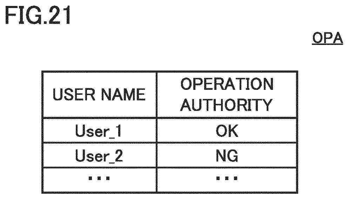

Fig. 21 is a view illustrating an example of operation authority information OPA in Fig. 20. Referring to Fig. 21, operation authority information OPA includes information indicating whether the operation authority is set for each user name. That is, operation authority information OPA is account information permitting the transfer instruction.

In the example of Fig. 21, the operation authority is set to the worker having a user name "User_1", while the operation authority is not set to the worker having a user name "User_2".

In the example of Fig. 21, an example in which provision of the operation authority is specified in units of user accounts (user names) as the account information is illustrated, but the present invention is not limited thereto, and the provision of the operation authority may be specified in units of user groups or in units of roles.

Display operation device 600 validates the transmission of the transfer instruction to relay unit 200 only when the worker whose user authentication is successful has the operation authority. Upon receiving the transfer instruction from display operation device 600, relay unit 200 starts the transfer of safety program SPG to safety unit 300.

As described above, relay unit 200 transfers safety program SPG transferred from support device 500 to safety unit 300 on conditions that the user authentication of the worker (user) is successful and that the predetermined operation authority is set to the worker (user) whose user authentication is successful.

The safety of the worker OP2 at the site where the safety system 1 is arranged can be further ensured by limiting the sender of the transfer instruction using the user authentication processing and the authority authentication processing as illustrated in Figs. 20 and 21.

In Fig. 20, an example in which user name UID and user authentication password UPW are used has been described, but any method may be used to implement the user authentication. For example, biological information (for example, face authentication or fingerprint authentication) may be used.

In addition, in Fig. 20, the configuration example in which display operation device 600 executes the user authentication is illustrated, but the execution subject of the user authentication may be any subject. Similarly, the execution subject of the management of the user account (addition or registration of the user or the like) may be any subject. For example, the user authentication and/or the management of the user account may be executed in any of control unit 100, relay unit 200, and safety unit 300 constituting safety system 1. Furthermore, an external server (for example, a single sign-on server) other than safety system 1 may execute the operation.

### (f6: Other modifications)

In the above description, the configuration example in which display operation device 600 presents the information to the worker at the site and the instruction is received from the worker at the site has been described. However, the present invention is not limited thereto, and the instruction from the worker at the site may be received by an arbitrary unit or the device.

For example, a display device and an input device disposed in any of control unit 100, relay unit 200, and safety unit 300 constituting safety system 1 may be used. Specifically, the information about safety program SPG transferred from support device 500 may be presented through an indicator (for example, a seven-segment display device and an LED) or a display disposed on an exposed surface of any unit. In this case, the indicator disposed on the exposed surface of one of the units presents the information about the safety program SPG transferred from support device 500 to the user. That is, the indicator disposed on the exposed surface of control unit 100 and the indicator disposed on the exposed surface of safety unit 300 present the information about safety program SPG to the user.

In addition, the instruction from the worker at the site may be received through a button, a dip switch, or the like disposed on the exposed surface of any unit. Furthermore, the instruction from the worker at the site may be received through safety system 1 or a portable terminal that wirelessly communicates with display operation device 600.

### <G. Other modes>

In the above embodiment, the system in which safety unit 300 that executes safety program SPG and relay unit 200 that exchanges the data with support device 500 are independent units is exemplified. When relay unit 200 and safety unit 300 are separated from each other, the remote maintenance can be easily executed by adding relay unit 200 to the existing system.

However, relay unit 200 and safety unit 300 are not necessarily separated from each other, and a configuration in which the relay unit and the safety unit are integrated may be adopted. Furthermore, a configuration in which all of control unit 100, relay unit 200, and safety unit 300 are integrated may be adopted. In this case, there is an advantage that the chassis can be made compact.

### <H. Appendix>

The embodiment as described above includes the following technical ideas.

### [Configuration 1]

A safety system including:
a processing execution unit (300) configured to execute safety control in accordance with a safety program (SPG);
a communication unit (200) configured to mediate an external access to the safety program held by the processing execution unit;
a support device (500) configured to transfer the safety program to the communication unit through a network (4) according to an operation of a user; and
presentation means (600) configured to present information about the safety program transferred from the support device to a user,
in which the communication unit is configured to transfer the safety program transferred from the support device to the processing execution unit under a condition of an instruction from a user.

### [Configuration 2]

The safety system described in configuration 1, in which
the support device is configured to transfer to the communication unit the safety program with an input first password (SPW), and
the communication unit is configured to transfer the safety program transferred from the support device to the processing execution unit on a condition that a second password (RPW) input from a user matches the first password.

### [Configuration 3]

The safety system described in configuration 2, in which the first password is any of an arbitrary character string, an arbitrary one of predetermined candidates, and a value randomly determined by the support device.

### [Configuration 4]

The safety system described in configuration 1, in which the communication unit is configured to transfer the safety program transferred from the support device to the processing execution unit on a condition that user authentication is successful and a condition that predetermined operation authority is set to the user of which the user authentication is successful.

### [Configuration 5]

The safety system described in any one of configurations 1 to 4, in which the communication unit is configured to discard the safety program transferred from the support device in response to an instruction to reject the transfer from a user.

### [Configuration 6]

The safety system described in any one of configurations 1 to 5, in which the information about the safety program includes at least one of a user who updated the safety program, an update date and time of the safety program, and a transfer destination of the safety program.

### [Configuration 7]

The safety system described in any one of configurations 1 to 6, in which the presentation means includes at least one of a display operation device network-connected to the communication unit, an indicator disposed on an exposed surface of the processing execution unit, and an indicator disposed on an exposed surface of the communication unit.

### [Configuration 8]

The safety system described in any one of configurations 1 to 7, in which the communication unit is configured to hold an electronic key, and the support device is configured to encrypt the safety program such that the communication unit decrypts the safety program using the electronic key, and transfer the safety program to the communication unit.

### [Configuration 9]

The safety system described in configuration 8, in which the communication unit is configured to hold a secret key (SK1) as the electronic key, and the support device is configured to hold a public key (PK1) paired with the secret key.

### [Configuration 10]

The safety system described in configuration 9, in which the support device is configured to:
generate a one-time key (TCK) when the safety program needs to be transferred;
encrypt the one-time key using the public key and transmits the encrypted one-time key to the communication unit; and
encrypt the safety program using the one-time key and transmit the encrypted safety program to the communication unit.

### [Configuration 11]

A maintenance method in a controller system (1),
the controller system comprising:
   a processing execution unit (300) configured to execute safety control in accordance with a safety program (SPG);
   a communication unit (200) configured to mediate an external access to the safety program held by the processing execution unit; and
   a support device (500),
the maintenance method including:
   transferring, by the support device, the safety program to the communication unit through a network according to an operation of a user (SQ108; SQ136);
   presenting information about the safety program transferred from the support device to the user (SQ114); and
   transferring the safety program transferred from the support device to the processing execution unit on a condition of an instruction from a user (SQ116, SQ118, SQ120, SQ122, SQ124; SQ117, SQ119, SQ121, SQ122, SQ124).

### <1. Advantages>

According to safety system 1 of the embodiment, the confirmation and instruction of the worker at the site are requested as the condition that safety program SPG transferred from support device 500 to relay unit 200 is reflected in safety unit 300. By adopting such conditions, cooperation between the operator of support device 500 located at a position away from the site and the worker at the site is required, whereby the remote maintenance can be executed while the requirements prescribed in IEC 62061 are satisfied. In particular, the safety of workers at the site can be further ensured. Furthermore, the efficiency of the remote maintenance can be enhanced, and the productivity of the production facility can be improved by the enhanced efficiency.

It should be considered that the disclosed embodiment is an example in all respects and not restrictive. The scope of the present invention is defined by not the above description, but the claims, and it is intended that all modifications within the meaning and scope of the claims are included in the present invention.

### REFERENCE SIGNS LIST

1, 2: safety system, 4: network, 10: internal bus, 100: control unit, 102, 202, 302, 502: processor, 104, 204, 304: chip set, 106, 206, 306, 504: main storage device, 108, 208, 308, 510: secondary storage device, 110, 210: communication controller, 112: USB controller, 114, 214, 314: memory card interface, 115, 215, 315: memory card, 116, 118, 120, 216, 218: network controller, 122, 322: internal bus controller, 124, 224, 324: indicator, 200: relay unit, 212, 520: communication interface, 300: safety unit, 400: functional unit, 450: power supply unit, 500: support device, 506: input unit, 508: output unit, 512: optical drive, 514: recording medium, 518: processor bus, 600: display operation device, 602, 604, 606: information, 608: acceptance button, 610: reject button, 612: password input field, 614: transmission button, 2010: Japanese Patent Laying-Open, 5102: OS, 5104: support program, 5106: project, 5108: standard control source program, 5110, 5112: safety source program, LS: list, OP1: operator, OP2: worker, OPA: operation authority information, PK1: public key, RPW: reception password, SK1, SK2: secret key, SPG: safety program, SPW: transmission password, SSP: encrypted safety program, STC: encrypted common key, TCK: common key, UID: user name, UPW: user authentication password

## Claims

1. A safety system comprising:
a processing execution unit configured to execute safety control in accordance with a safety program;
a communication unit configured to mediate an external access to the safety program held by the processing execution unit;
a support device configured to transfer the safety program to the communication unit through a network according to an operation of a user; and
presentation means configured to present information about the safety program transferred from the support device to a user,
wherein the communication unit is configured to transfer the safety program transferred from the support device to the processing execution unit on a condition of an instruction from a user.

2. The safety system according to claim 1, wherein
the support device is configured to transfer to the communication unit the safety program with an input first password, and
the communication unit is configured to transfer the safety program transferred from the support device to the processing execution unit on a condition that a second password input from a user matches the first password.

3. The safety system according to claim 2, wherein the first password is any of an arbitrary character string, an arbitrary one of predetermined candidates, and a value randomly determined by the support device.

4. The safety system according to claim 1, wherein the communication unit is configured to transfer the safety program transferred from the support device to the processing execution unit on a condition that user authentication is successful and a condition that predetermined operation authority is set to the user of which the user authentication is successful.

5. The safety system according to any one of claims 1 to 4, wherein the communication unit is configured to discard the safety program transferred from the support device in response to an instruction to reject the transfer from a user.

6. The safety system according to any one of claims 1 to 5, wherein the information about the safety program includes at least one of a user who updated the safety program, an update date and time of the safety program, and a transfer destination of the safety program.

7. The safety system according to any one of claims 1 to 6, wherein the presentation means includes at least one of a display operation device network-connected to the communication unit, an indicator disposed on an exposed surface of the processing execution unit, and an indicator disposed on an exposed surface of the communication unit.

8. The safety system according to any one of claims 1 to 7, wherein the communication unit is configured to hold an electronic key, and
the support device is configured to encrypt the safety program such that the communication unit decrypts the safety program using the electronic key, and transfer the safety program to the communication unit.

9. The safety system according to claim 8, wherein the communication unit is configured to hold a secret key as the electronic key, and
the support device is configured to hold a public key paired with the secret key.

10. The safety system according to claim 9, wherein the support device is configured to:
generate a one-time key when the safety program needs to be transferred;
encrypt the one-time key using the public key and transmit the encrypted one-time key to the communication unit; and
encrypt the safety program using the one-time key and transmit the encrypted safety program to the communication unit.

11. A maintenance method in a controller system,
the controller system comprising:
a processing execution unit configured to execute safety control in accordance with a safety program;
a communication unit configured to mediate an external access to the safety program held by the processing execution unit; and
a support device,
the maintenance method comprising:
transferring, by the support device, the safety program to the communication unit through a network according to an operation of a user;
presenting information about the safety program transferred from the support device to a user; and
transferring the safety program transferred from the support device to the processing execution unit on a condition of an instruction from a user.
